# EUROPEAN PATENT SPECIFICATION

(11) **EP 3 875 190 B1**
(45) Date of publication and mention of the grant of the patent: **14.08.2024**
(21) Application number: 19880521.0
(22) Date of filing: 19.09.2019
(51) Int. Cl.: B23B 19/02, B23Q 11/00, B24B 41/04, F16C 33/80, H02K 5/20

(54) **SPINDLE DEVICE HAVING BUILT-IN MOTOR**
SPINDELVORRICHTUNG MIT EINGEBAUTEM MOTOR
DISPOSITIF DE BROCHE AYANT UN MOTEUR INTÉGRÉ

(30) Priority: 31.10.2018 JP 2018205650
(43) Date of publication of application: 08.09.2021
(73) Proprietor: NSK Ltd., Tokyo 141-8560 (JP)
(72) Inventor: MATSUNAGA Kyohei, Fujisawa-shi, Kanagawa 251-8501 (JP); OGURI Shoichiro, Fujisawa-shi, Kanagawa 252-0811 (JP)
(74) Representative: Grünecker Patent- und Rechtsanwälte PartG mbB
(86) International application number: PCT/JP2019/036847
(87) International publication number: WO 2020/090276

(56) References cited:
- EP-A2- 1 088 618
- WO-A1-2013/100099
- WO-A1-2015/068750
- CN-U- 203 843 189
- JP-A- 2015 223 022
- JP-A- 2018 157 715

## Description

### TECHNICAL FIELD

The present invention relates to a spindle device having a built-in motor.

### BACKGROUND ART

A spindle device applied to a machine tool or the like includes a cutting tool at a tip end of a rotation shaft, and performs cutting and grinding of a workpiece by rotating at a high speed. In general, during processing, a large amount of working fluid is supplied to a processing site for a purpose of lubricating and cooling the cutting tool and the processing site. That is, due to a lubrication effect of the working fluid, machinability is improved, wear of a cutting edge is prevented, and a tool life is prolonged. In addition, due to a cooling effect of the working fluid, thermal expansion of the cutting tool and the workpiece is prevented to improve processing accuracy, and thermal welding of the processing site is prevented to improve processing efficiency and surface texture of a processing surface.

However, a distance between the spindle device and the processing site may be short, and a large amount of the working fluid may be applied to a front surface of the spindle device, which may cause a problem. That is, a large amount of the supplied working fluid may enter inside of a bearing that supports the rotation shaft, and when the working fluid enters the inside of the bearing, lubrication failure or seizure of the bearing may be caused. Therefore, various water-resistance mechanisms are applied to the spindle device for a purpose of enhancing water-resistance performance of the spindle device and preventing the working fluid from entering the inside of the bearing.

In particular, in the spindle device used in the machine tool, when a dmn value of the bearing is 400,000 or more (more preferably 500,000 or more), a non-contact water-resistance mechanism called a flinger that rotates integrally with the rotation shaft is often applied to a front end portion (a tool side) of the spindle device. The flinger narrows a gap between the flinger and a housing to form a so-called labyrinth seal, thereby improving the water-resistance performance. This is because, in a contact seal such as an oil seal or a V seal, a large amount of heat from a seal contact portion is generated during high-speed rotation, and a seal member wears, resulting in difficulty of maintaining the water-resistance performance for a long period of time.

In recent years, in a spindle for the machine tool, a rotation speed of the spindle has been increased in order to improve the processing efficiency, and accordingly, a pindle device having a built-in motor has been adopted. For example, Patent Literature 1 discloses a spindle device having a built-in motor, which includes a flinger.

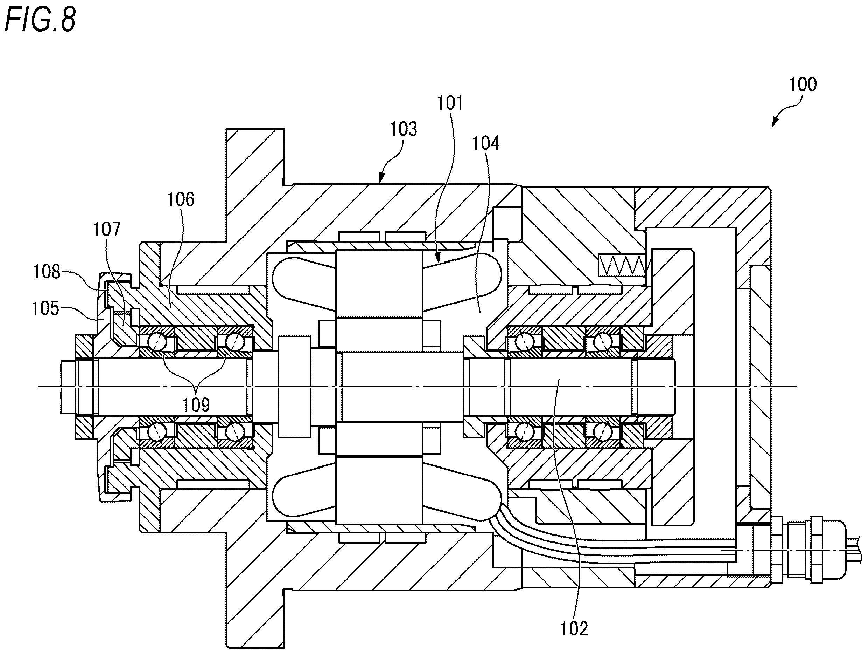

Fig. 8 is a cross-sectional view showing an example of a related-art spindle device having a built-in motor, which includes a flinger. A spindle device 100 includes a motor 101 therein, and the motor 101 is driven to rotate a rotation shaft 102. A flinger 105 is fixed to a front end portion of the spindle device 100 so as to rotate integrally with the rotation shaft 102, and a labyrinth seal portion 108 is formed between a front housing 106 and a front outer ring retainer 107 of a housing 103. Thereby, the flinger 105 rotates integrally with the rotation shaft 102 at a high speed. Therefore, in addition to the above labyrinth effect, there is also an effect of swinging working fluid applied to the flinger 105 radially outward by a centrifugal force to prevent the working fluid from entering inside of the spindle device 100, in particular, inside of a front bearing 109.

The spindle device known from Patent Literature 2 discloses a spindle device in which a water flows through a channel of the rotating shaft to the motor chamber and via a bypass hole to the labyrinth.

### CITATION LIST

### PATENT LITERATURE

Patent Literature 1: JP-A-2016-26900
Patent Literature 2 : CN 203 843 189 U

### SUMMARY OF INVENTION

### TECHNICAL PROBLEM

In the spindle device 100 as shown in Fig. 8, thermal energy is generated in the motor 101 due to various losses occurring when the motor is driven. Due to the thermal energy, in particular, air in a motor chamber 104 where the motor 101 is accommodated is heated inside the housing 103 to become high-temperature air. Since the spindle device 100 is generally designed to prevent air, moisture, dust and the like from enter therein from outside as much as possible, a hole or the like that connects an internal space of the spindle device 100 to the outside is often not formed except for the labyrinth seal portion 108 provided in a front portion of the rotation shaft 102. Therefore, the internal space (in particular, the motor chamber 104) of the spindle device 100 is higher in pressure than the outside due to the high-temperature air.

On the other hand, a vicinity of the flinger 105 is a portion where a peripheral speed is the highest during rotation of the rotation shaft 102, and the air in the vicinity of the flinger 105 goes around with rotation of the flinger 105. According to Bernoulli's theorem, when a velocity of a fluid increases, a pressure thereof decreases. That is, since a speed of the air that goes around with the rotation of the flinger 105 having the highest peripheral speed in the spindle device 100 is the highest in the air in a vicinity of the spindle device 100, a pressure thereof is also the lowest.

As described above, the pressure of the air in the motor chamber 104 increases due to the thermal energy generated in the motor 101, while the pressure of the air in the vicinity of the flinger 105 decreases due to the rotation of the flinger 105. Therefore, inside the spindle device 100, a phenomenon occurs in which the air flows from the motor chamber 104 toward a front surface of the spindle device 100 (a direction toward the flinger 105).

In this case, since the front bearing 109 is located in the middle of a space connecting the internal space of the spindle device 100 and the labyrinth seal portion 108, the high-temperature air in the motor chamber 104 passes through a gap in the front bearing 109 during the rotation of the rotation shaft 102. Due to movement of the high-temperature air, a lubricant (oil, grease or the like) of the front bearing 109 is forcibly moved from an appropriate place for lubrication, and the high-temperature air passes through inside of the front bearing 109, whereby an internal temperature of the bearing 109 rises and an operating environment of the bearing 109 becomes harsh, which may lead to early damage to the bearing 109.

The present invention has been made in view of the above-described problems, and an object thereof is to provide a spindle device having a built-in motor, capable of improving water-resistance performance and preventing damage to a bearing.

### SOLUTION TO PROBLEM

The object of the present invention is achieved by the spindle device defined in appended claim 1.

### ADVANTAGEOUS EFFECTS OF INVENTION

According to the spindle device having the built-in motor of the present invention, water-resistance performance can be improved by the flinger, and high-temperature air in the motor chamber heated by thermal energy generated from the motor is exhausted through the bypass hole that allows the motor chamber and the labyrinth seal to communicate with each other without passing through the front bearing, whereby a temperature rise inside the front bearing can be prevented, and reliability of the front bearing and thus the spindle device can be improved.

### BRIEF DESCRIPTION OF DRAWINGS

Fig. 1 is a cross-sectional view of a spindle device having a built-in motor according to a first embodiment of the present invention.
Fig. 2 is a cross-sectional view of a spindle device having a built-in motor type according to a first modification of the first embodiment.
Fig. 3 is a cross-sectional view of a spindle device having a built-in motor according to a second modification of the first embodiment.
Fig. 4 is a cross-sectional view of a spindle device having a built-in motor according to a third modification of the first embodiment.
Figs. 5A and 5B are schematic views of modifications of the spindle device having the built-in motor according to the present invention, in which cross-sectional areas of a plurality of bypass holes are different.
Fig. 6 is a cross-sectional view of a spindle device having a built-in motor according to a second embodiment of the present invention.
Fig. 7 is a cross-sectional view of a spindle device having a built-in motor according to a third embodiment of the present invention.
Fig. 8 is a cross-sectional view of a related-art spindle device.

### DESCRIPTION OF EMBODIMENTS

Hereinafter, embodiments of a spindle device having a built-in motor according to the present invention will be described in detail with reference to the drawings. In the following description, a side on which a tool is mounted on a rotation shaft (a tool side) is also referred to as a front side, and a side opposite to the tool side is referred to as a rear side.

### (First embodiment)

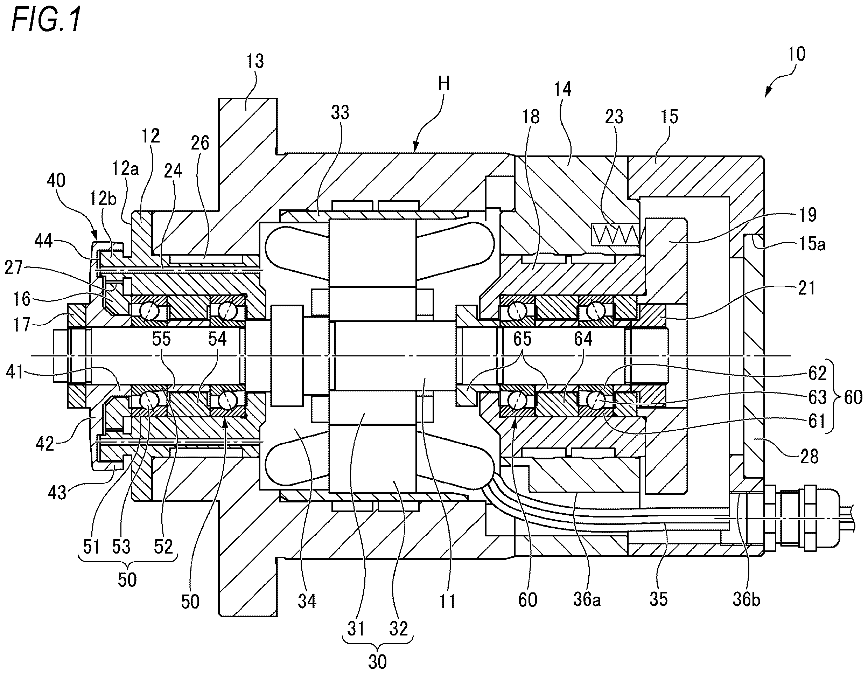

Fig. 1 is a cross-sectional view of a spindle device having a built-in motor according to a first embodiment of the present invention.

As shown in Fig. 1, in a spindle device 10 having a built-in motor for a machine tool spindle (hereinafter, also simply referred to as a "spindle device 10"), a rotation shaft 11 is rotatably supported by a housing H by two rows of front bearings 50, 50 arranged on a tool side (a left side in Fig. 1) and two rear bearings 60, 60 arranged on an anti-tool side (a right side in Fig. 1). The housing H mainly includes a front housing 12, an outer cylinder 13, a rear housing 14 and a rear lid 15 in this order from the tool side, and is fastened and fixed by bolts (not shown).

Each front bearing 50 is an angular contact ball bearing having an outer ring 51, an inner ring 52, balls 53 as rolling elements arranged at a contact angle, and a cage (not shown), and each rear bearing 60 is an angular contact ball bearing having an outer ring 61, an inner ring 62, balls 63 as rolling elements arranged at a contact angle, and a cage (not shown). The front bearings 50, 50 (a parallel combination) and the rear bearings 60, 60 (a parallel combination) are arranged in cooperation with each other to form a back-to-back combination.

The outer rings 51, 51 of the front bearings 50, 50 are internally fitted to the front housing 12, and are positioned and fixed in an axial direction with respect to the front housing 12 via an outer ring spacer 54 by a front outer ring retainer 16 screwed and fixed to a female screw 27 formed in the front housing 12. The female screw 27 protrudes forward from a front end surface 12a of a portion of the front housing 12 to which the outer rings 51, 51 are internally fitted, and is formed in an inner peripheral surface of a front cylindrical portion 12b facing a flinger 40 described later.

The inner rings 52, 52 of the front bearings 50, 50 are externally fitted to the rotation shaft 11, and are positioned and fixed in the axial direction with respect to the rotation shaft 11 via the flinger 40 described later and an inner ring spacer 55 by a nut 17 fastened to the rotation shaft 11.

The outer rings 61, 61 of the rear bearings 60, 60 are internally fitted to a sleeve 18 that is internally fitted to the rear housing 14 so as to be slidable in the axial direction with respect to the rear housing 14, and are positioned and fixed in the axial direction with respect to the sleeve 18 via an outer ring spacer 64 by a rear outer ring retainer 19 integrally fixed to the sleeve 18 with a bolt (not shown).

The inner rings 62, 62 of the rear bearings 60, 60 are externally fitted to the rotation shaft 11, and are positioned and fixed in the axial direction with respect to the rotation shaft 11 via inner ring spacers 65, 65 by another nut 21 fastened to the rotation shaft 11. A coil spring 23 is disposed between the rear housing 14 and the rear outer ring retainer 19, and a spring force of the coil spring 23 presses the rear outer ring retainer 19 rearward together with the sleeve 18. Thereby, a preload is applied to the front bearings 50, 50 and the rear bearings 60, 60.

A tool mounting hole and a female screw (not shown) formed in the axial direction through an axial center are provided on the tool side of the rotation shaft 11. The tool mounting hole and the female screw are used to mount a tool (not shown) such as a cutting tool on the rotation shaft 11. Instead of the tool mounting hole and the female screw, a drawbar known in related-art (not shown) may be slidably inserted into a shaft core of the rotation shaft 11. Each draw bar includes a collet portion to which a tool holder (not shown) is fixed, and urges the tool holder toward the anti-tool side by a force of a disc spring.

A motor 30 including a rotor 31 arranged so as to be rotatable integrally with the rotation shaft 11 and a stator 32 arranged around the rotor 31 is disposed substantially at a center in the axial direction of the rotation shaft 11 between the front bearings 50, 50 and the rear bearings 60, 60. The stator 32 is fixed to the outer cylinder 13 by internally fitting a cooling jacket 33 shrink-fitted to the stator 32 to the outer cylinder 13 constituting the housing H.

An electric wire 35 that is connected to a coil of the stator 32 and supplies electric power to the stator 32 is inserted through wiring holes 36a, 36b provided in the rear housing 14 and the rear lid 15, and is connected to an external power source. The motor 30 supplies the electric power to the stator 32 via the electric wire 35 to generate a rotational force in the rotor 31 to rotate the rotation shaft 11. The motor 30 is accommodated in a motor chamber 34 that is a space surrounded by the front housing 12, the outer cylinder 13, the rear housing 14 and the sleeve 18 around the rotation shaft 11. The rear lid 15 has an opening cover 28 that closes an opening 15a formed in a rear end portion.

As described above, the flinger 40 is externally fitted to a front end portion side of the rotation shaft 11 closer to the tool side (the left side in the drawing) than the front bearings 50, 50, and is fixed to the rotation shaft 11 together with the inner rings 52, 52 by the nut 17.

The flinger 40 includes a boss portion 41 externally fitted to the rotation shaft 11, a disk portion 42 extending radially outward from the boss portion 41, and an circular ring portion 43 extending rearward from an outer peripheral portion of the disk portion 42 in a ring shape.

An inner surface of the disk portion 42 in the axial direction is arranged to axially face front end surfaces of the front housing 12 and the front outer ring retainer 16 via a slight axial gap, for example, a gap of about 0.5 mm, and an inner peripheral surface of the circular ring portion 43 is arranged to radially face an outer peripheral surface of the front housing 12 via a slight radial gap, for example, a gap of about 0.5 mm. Thereby, the flinger 40 constitutes a so-called labyrinth seal 44 between the front housing 12 and the front outer ring retainer 16.

As described above, an air curtain is formed on an outer peripheral portion of the front housing 12 by the flinger 40, and when a workpiece is processed, a water-resistance mechanism that prevents working fluid falling on the spindle device 10 from entering the front bearings 50, 50 is formed. Even when the working fluid or dust enters a labyrinth portion, the working fluid or the dust can be discharged from the circular ring portion 43 to the outside by a scattering effect due to a centrifugal force of the flinger 40, and the working fluid and the dust can be prevented from entering inside of the rotation shaft 11.

A plurality of bypass holes 24 that allow the motor chamber 34 and the labyrinth seal 44 to communicate with each other are formed in the front housing 12. An air resistance of the bypass hole 24 is smaller than an air resistance of an internal gap of the front bearing 50 due to a magnitude of a cross-sectional area or the like.

The bypass hole 24 is a straight hole extending in the axial direction in the front housing 12. The bypass hole 24 has a circular cross section whose cross-sectional area does not change in a longitudinal direction, and can be easily processed. In the present embodiment, the plurality of bypass holes 24 are formed radially outward than an inner peripheral surface of the portion of the front housing 12 to which the outer rings 51, 51 of the front bearings 50, 50 are fitted and the female screw 27 to which the front outer ring retainer 16 is screwed, and at radial positions radially inward than a cooling groove 26 formed in an outer peripheral surface.

When the rotation shaft 11 is driven, air that has become high in temperature due to heat generation from the motor 30 moves to the front of the spindle device 10 due to a pressure difference between the motor chamber 34 and the labyrinth seal 44, but by providing the bypass hole 24 that allows the motor chamber 34 and the labyrinth seal 44 in the front housing 12 to communicate with each other, the high-temperature air flows through the bypass hole 24 having an air resistance smaller than that of the internal gap of the front bearing 50.

Thereby, forced movement of a lubricant in the front bearing 50 and an abnormal temperature rise of a bearing portion can be prevented, early damage to the front bearing 50 can be prevented, whereby reliability of the spindle device 10 is improved.

By the air in the motor chamber 34 released from the labyrinth seal 44, it is possible to prevent the working fluid from entering inside of the front bearing 50 and the working fluid that has entered inside of the spindle device 10 while the rotation shaft 11 is stopped from moving further. Thereby, water-resistance performance of the spindle device 10 is further improved.

In the present embodiment, the number of the bypass holes 24, a circumferential phase, the cross-sectional area and the like can be appropriately designed according to specifications, use conditions and the like of the spindle device 10.

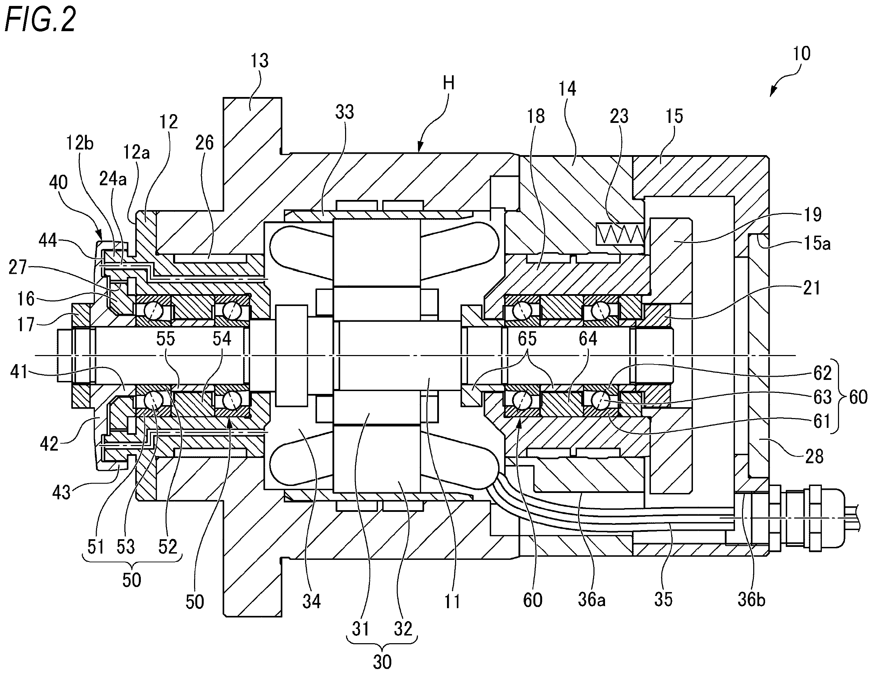

Fig. 2 is a cross-sectional view of a spindle device according to a first modification of the first embodiment. In this case, a bypass hole 24a is formed to be bent in the front housing 12, and allows the motor chamber 34 and the labyrinth seal 44 to communicate with each other. However, also in the present modification, since an air resistance of the bypass hole 24a is smaller than an air resistance of an internal gap of the front bearing 50, high-temperature air in the motor chamber 34 flows through the bypass hole 24a.

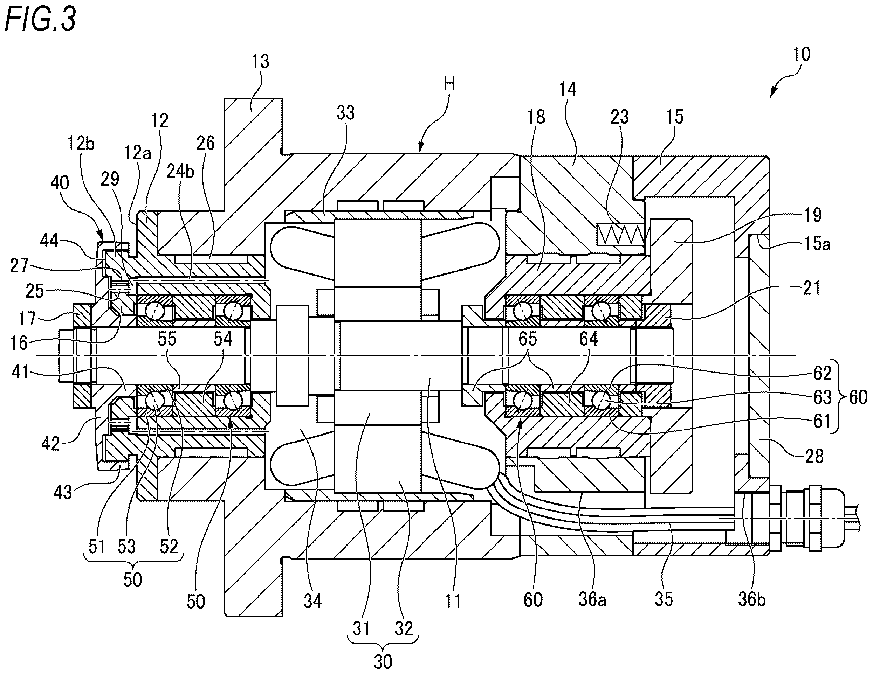

Fig. 3 is a cross-sectional view of a spindle device according to a second modification of the first embodiment. In this case, the motor chamber 34 and the labyrinth seal 44 communicate with each other through a space 29 formed between the front housing 12 and the front outer ring retainer 16 by a bypass hole 24b formed in the front housing 12 and a bypass hole 25 formed in the front outer ring retainer 16. However, also in the present modification, since an air resistance of the bypass holes 24b, 25 is smaller than an air resistance of an internal gap of the front bearing 50, high-temperature air in the motor chamber 34 flows through the bypass holes 24b, 25.

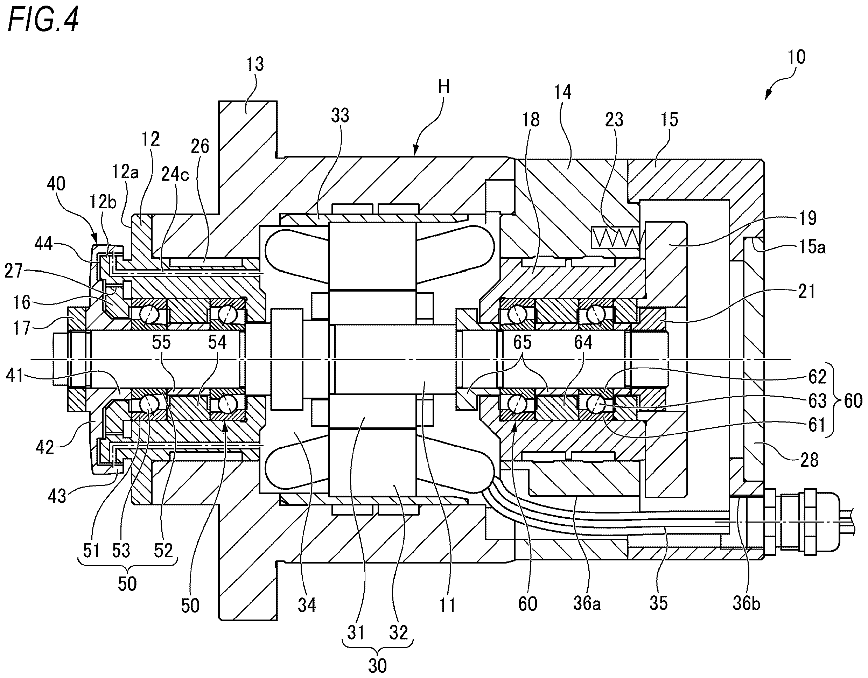

Fig. 4 is a cross-sectional view of a spindle device according to a third modification of the first embodiment. In this case, a bypass hole 24c formed in the front housing 12 extends in the axial direction in the front housing 12 from the motor chamber 34, and is formed to be bent radially outward so as to open in an outer peripheral surface of the front housing 12, the opening facing an inner peripheral surface of the circular ring portion 43 of the flinger 40. However, also in the present modification, since an air resistance of the bypass hole 24c is smaller than an air resistance of an internal gap of the front bearing 50, high-temperature air in the motor chamber 34 flows through the bypass hole 24c.

As for the high-temperature air in the motor chamber 34, the air having a higher temperature stays higher. Therefore, in order to efficiently exhaust the high-temperature air, it is desirable to efficiently exhaust the air staying above in the motor chamber 34. Therefore, in a case of the spindle device 10 in which the rotation shaft 11 is used in a horizontal state, in addition to setting the air resistance of the bypass hole 24 to be smaller than the air resistance of the internal gap of the front bearing 50, it is preferable that the air resistance of the bypass hole 24 arranged above the rotation shaft 11 is set to be smaller than the air resistance of the bypass hole 24 arranged below the rotation shaft 11 to actively exhaust the air staying above in the motor chamber 34.

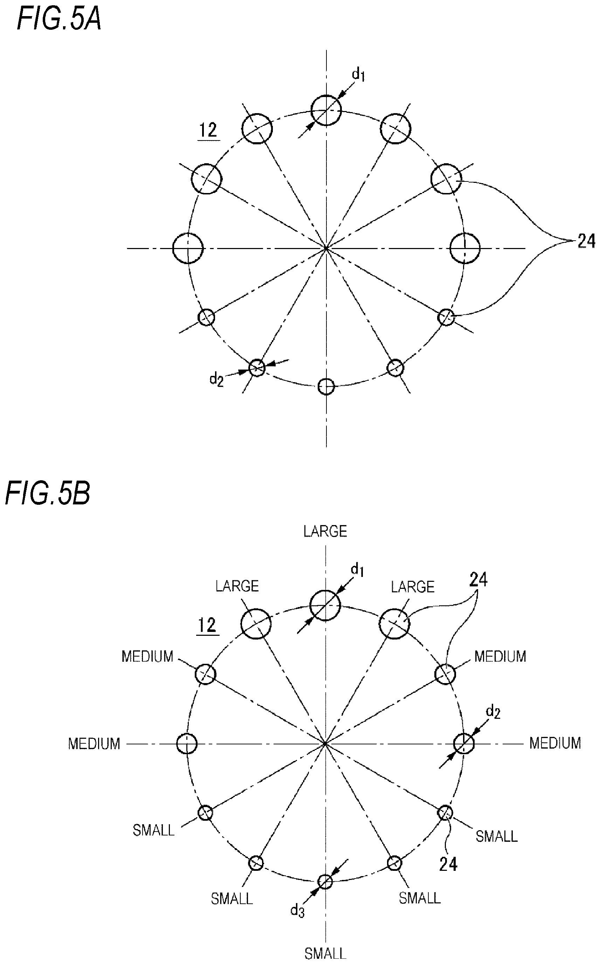

Specifically, as shown in Fig. 5A, a hole diameter d1 of the bypass hole 24 arranged above the rotation shaft 11 is set to be larger than a hole diameter d2 of the bypass hole 24 arranged below the rotation shaft 11, and a total cross-sectional area of the bypass holes 24 arranged above the rotation shaft 11 is set to be larger than a total cross-sectional area of the bypass holes 24 arranged below the rotation shaft 11.

As shown in Fig. 5B, a hole diameter of the bypass hole 24 may be gradually reduced from the bypass hole 24 arranged above the rotation shaft 11 toward the bypass hole 24 disposed below the rotation shaft 11 (d1, d2, d3). The number of the bypass holes 24 arranged above the rotation shaft 11 can be set to be larger than the number of the bypass holes 24 arranged below the rotation shaft 11.

### (Second embodiment)

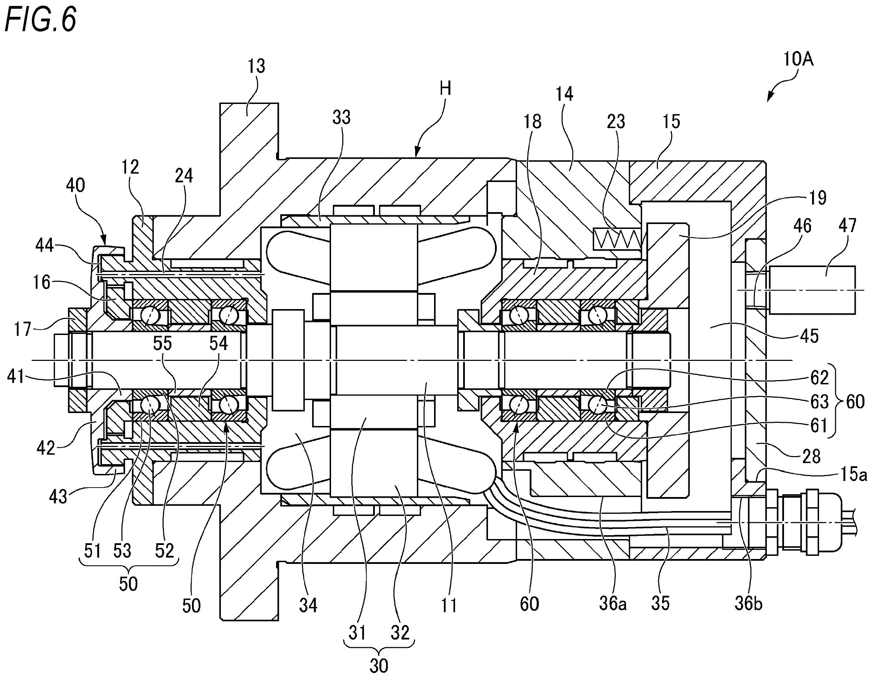

Next, a second embodiment of the spindle device will be described with reference to Fig. 6. As shown in Fig. 6, a rear space 45 mainly formed by the rear housing 14, the rear lid 15 and the sleeve 18 is provided at the rear of the rotation shaft 11. In a spindle device 10A according to the present embodiment, an opening hole 46 is formed in the opening cover 28 of the rear lid 15 so as to connect the rear space 45 to outside of the spindle device 10A. A filter member 47 such as a silencer is attached to the opening hole 46 to prevent a foreign matter such as dust and mist from entering inside of the spindle device 10A.

Therefore, according to the spindle device 10A of the present embodiment, in addition to the bypass hole 24 that is formed in the front housing 12 and allows the motor chamber 34 and the labyrinth seal 44 to communicate with each other, an opening hole 46 is further provided to connect the rear space 45 on a side opposite to the motor chamber 34 with respect to the rear bearings 60, 60, to the outside.

Thereby, outside air of substantially the same amount as high-temperature air exhausted from the motor chamber 34 to the labyrinth seal 44 via the bypass hole 24 is supplied to the motor chamber 34 via the opening hole 46 and the wiring hole 36a of the rear housing 14. Then, the high-temperature air in the spindle device 10A, particularly the motor chamber 34, can be efficiently exhausted without passing through an internal gap of the front bearing 50, and forced movement of a lubricant in the front bearing 50 and an abnormal temperature rise of a bearing portion can be prevented, whereby early damage to the front bearing 50 can be prevented. In addition, the foreign matter such as dust and mist is prevented from entering the inside of the spindle device 10A.

### (Third embodiment)

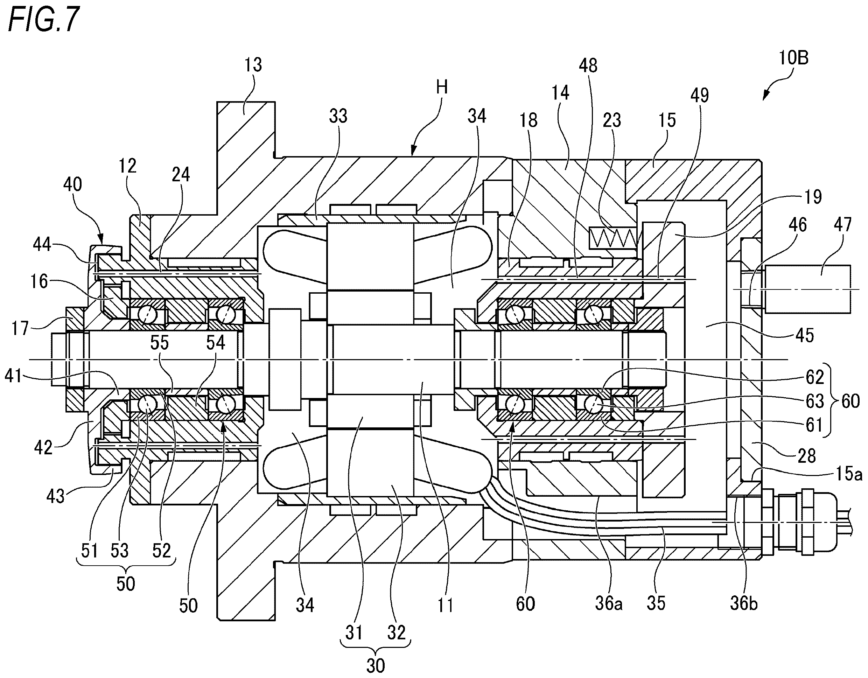

Next, a third embodiment of the spindle device will be described with reference to Fig. 7. As shown in Fig. 7, in a spindle device 10B according to the present embodiment, in addition to a configuration of the spindle device 10A according to the second embodiment, other bypass holes 48, 49 that allow the motor chamber 34 and the rear space 45 to communicate with each other are provided in the sleeve 18 and the rear outer ring retainer 19.

Thereby, even when the wiring hole 36a of the rear housing 14 is closed for some reason, air in the rear space 45 flows to the motor chamber 34 through the other bypass holes 48 and can be prevented from moving through internal gaps of the rear bearings 60, 60, so that influence of the air on the rear bearings 60, 60 is prevented.

The present invention is not limited to the embodiments and the modifications described above, and modifications, improvements and the like can be made as long as they fall under the scope of the appended claims.

For example, the spindle device having the built-in motor according to the present invention can be suitably used for a grinding machine spindle.

### REFERENCE SIGNS LIST

10, 10A, 10B spindle device
11 rotation shaft
12 front housing
16 front outer ring retainer
18 sleeve
19 rear outer ring retainer
23 coil spring (biasing member)
24, 24a, 24b, 24c, 25 bypass hole
30 motor
31 rotor
32 stator
34 motor chamber
40 flinger
44 labyrinth seal
45 rear space
46 opening hole
47 filter member
48 other bypass hole
50 front bearing
51 outer ring
52 inner ring
53 ball
60 rear bearing
61 outer ring
62 inner ring
63 ball
H housing

## Claims

1. A spindle device (10) having a built-in motor (30) including a rotation shaft (11), a front bearing (50) and a rear bearing (60) rotatably supporting the rotation shaft (11) with respect to a housing (H), respectively, and said motor (30) including a rotor (31) arranged between the front bearing (50) and the rear bearing (60) so as to be rotatable integrally with the rotation shaft (11), and a stator (32) arranged around the rotor (31),
the spindle device (10) having the built-in motor (30) comprising:
a flinger (40) fixed to a front end portion side of the rotation shaft (11) to form a labyrinth seal (44) with the housing (H),
wherein the housing (H) includes at least one bypass hole (24) that allows a motor chamber (34) having the motor (30) arranged therein and the labyrinth seal (44) to communicate with each other, wherein the housing (H) includes a front housing (12) to which an outer ring (51) of the front bearing (50) is fitted, and a front outer ring retainer (16) that is screwed and fixed to the front housing (12) to position the outer ring (51) in an axial direction, and forms the labyrinth seal (44) with the flinger (40),
wherein the bypass hole (24) is formed in the front housing (12), and wherein when the rotation shaft (11) is driven, air that has become high in temperature due to heat generation from the motor (30) can move to the front of the spindle device (10) due to a pressure difference between the motor chamber (34) and the labyrinth seal (44) and flow through the bypass hole (24) thereby forming an air curtain on an outer peripheral portion of the front housing (12) by the flinger (40), so that
a water-resistance mechanism that prevents working fluid falling on the spindle device (10) from entering the front bearing (50) is formed.

2. The spindle device (10) having the built-in motor (30) according to claim 1, wherein the housing (H) includes an opening hole (46) that connects a rear space (45) formed by the housing (H) on a side opposite to the motor chamber (34) with respect to the rear bearing (60), to outside.

3. The spindle device (10) having the built-in motor (30) according to claim 2,
wherein a filter member (47) capable of removing a foreign matter is attached to the opening hole (46).

4. The spindle device (10) having the built-in motor (30) according to claim 2 or 3, further comprising:
a sleeve (18) to which an outer ring (61) of the rear bearing (60) is internally fitted and that is internally fitted to the housing (H) so as to be slidable in the axial direction of the rotation shaft (11) with respect to the housing (H); and
a rear outer ring retainer (19) fixed to the sleeve (18) and having a biasing member (23) disposed between the rear outer ring retainer (19) and the housing (H),
wherein the sleeve (18) and the rear outer ring retainer (19) have at least one other bypass hole (48) that allows the motor chamber (34) and the rear space (45) to communicate with each other.

5. The spindle device (10) having the built-in motor (30) according to any one of claims 1 to 4,
wherein in the spindle device (10), the rotation shaft (11) is used in a horizontal state, and a total cross-sectional area of any bypass hole (24) arranged above the rotation shaft (11) is larger than a total cross-sectional area of any bypass hole (24) arranged below the rotation shaft (11).

6. The spindle device (10) having the built-in motor (30) according to any one of claims 1 to 5, wherein a plurality of bypass holes (24) are formed in the front housing (12) and spaced equally around the rotation shaft (11) in the circumferential direction.

7. The use of the spindle device (10) having the built-in motor (30) according to any one of claims 1 to 6 in a machine tool spindle.

8. The use of the spindle device (10) having the built-in motor (30) according to any one of claims 1 to 6 in a grinding machine spindle.

## Patentansprüche

1. Spindelvorrichtung (10) mit einem eingebauten Motor (30), der eine Drehwelle (11), ein vorderes Lager (50) und ein hinteres Lager (60) enthält, die die Drehwelle (11) jeweils in Bezug auf ein Gehäuse (H) drehbar lagern, wobei der Motor (30) einen Rotor (31), der zwischen dem vorderen Lager (50) und dem hinteren Lager (60) so angeordnet ist, dass er integral mit der Drehwelle (11) gedreht werden kann, sowie einen Stator (32) enthält, der um den Rotor (31) herum angeordnet ist,
wobei die Spindelvorrichtung (10) mit dem eingebauten Motor (30) umfasst:
einen Schleuderring (40), der an der Seite eines vorderen Endabschnitts der Drehwelle (11) befestigt ist, und eine Labyrinthdichtung (44) mit dem Gehäuse (H) bildet,
wobei das Gehäuse (H) wenigstens ein Umgehungsloch (24) aufweist, das es einer Motorkammer (34), in der der Motor (30) angeordnet ist, und der Labyrinthdichtung (44) ermöglicht, miteinander zu kommunizieren,
wobei das Gehäuse (H) ein vorderes Gehäuse (12), auf das ein Außenring (51) des vorderen Lagers (50) aufgepasst ist, sowie eine vordere Außenring-Sicherung (16) enthält, die an das vordere Gehäuse (12) angeschraubt und daran befestigt ist, um den Außenring (51) in einer axialen Richtung zu positionieren, und das die Labyrinthdichtung (44) mit dem Schleuderring (40) bildet,
wobei das Umgehungsloch (24) in dem vorderen Gehäuse (12) ausgebildet ist, und wobei, wenn die Drehwelle (11) angetrieben wird, sich Luft, die aufgrund von Wärmeerzeugung durch den Motor (30) eine hohe Temperatur erreicht hat, aufgrund eines Druckunterschiedes zwischen der Motorkammer (34) und der Labyrinthdichtung (44) zu der Vorderseite der Spindelvorrichtung (10) bewegen und durch das Umgebungsloch (24) strömen kann, wodurch durch den Schleuderring (40) ein Luftvorhang an einem Außenumfangsabschnitt des vorderen Gehäuses (12) gebildet wird, so dass in Wasserwiderstands-Mechanismus gebildet wird, der verhindert, dass Arbeitsfluid, das auf die Spindelvorrichtung (10) fällt, in das vordere Lager (50) eintritt.

2. Spindelvorrichtung (10) mit dem eingebauten Motor (30) nach Anspruch 1, wobei das Gehäuse (H) ein Öffnungsloch (46) enthält, das einen hinteren Raum (45), der von dem Gehäuse (H) an einer der Motorkammer (34) in Bezug auf das hintere Lager (60) gegenüberliegenden Seite gebildet wird, mit der Außenseite verbindet.

3. Spindelvorrichtung (10) mit dem eingebauten Motor (30) nach Anspruch 2,
wobei ein Filterelement (47), das in der Lage ist, einen Fremdkörper zu entfernen, an dem Öffnungsloch (46) angebracht ist.

4. Spindelvorrichtung (10) mit dem eingebauten Motor (30) nach Anspruch 2 oder 3, die des Weiteren umfasst:
eine Hülse (18), auf die ein Außenring (61) des hinteren Lagers (60) innen aufgepasst ist und die innen auf das Gehäuse (H) so aufgepasst ist, dass sie in der axialen Richtung der Drehwelle (11) in Bezug auf das Gehäuse (H) verschoben werden kann; sowie
eine hintere Außenring-Sicherung (19), die an der Hülse (18) befestigt ist und ein Vorspannelement (23) aufweist, das zwischen der hinteren Außenring-Sicherung (19) und dem Gehäuse (H) angeordnet ist,
wobei die Hülse (18) und die hintere Außenring-Sicherung (19) wenigstens ein weiteres Umgehungs-Loch (48) aufweisen, das es der Motorkammer (34) und dem hinteren Raum (45) ermöglicht, miteinander zu kommunizieren.

5. Spindelvorrichtung (10) mit dem eingebauten Motor (30) nach einem der Ansprüche 1 bis 4,
wobei in der Spindelvorrichtung (10) die Drehwelle (11) in einem horizontalen Zustand zum Einsatz kommt, und eine Gesamt-Querschnittsfläche jedes Umgehungslochs (24), das oberhalb der Drehwelle (11) angeordnet ist, größer ist als eine Gesamt-Querschnittsfläche jedes Umgehungslochs (24), das unterhalb der Drehwelle (11) angeordnet ist.

6. Spindelvorrichtung (10) mit dem eingebauten Motor (30) nach einem der Ansprüche 1 bis 5, wobei in dem vorderen Gehäuse (12) eine Vielzahl von Umgehungs-Löchern (24) ausgebildet und in Umfangsrichtung gleichmäßig um die Drehwelle (11) herum beabstandet sind.

7. Einsatz der Spindelvorrichtung (10) mit dem eingebauten Motor (30) nach einem der Ansprüche 1 bis 6 in einer Werkzeugmaschinen-Spindel.

8. Einsatz der Spindelvorrichtung (10) mit dem eingebauten Motor (30) nach einem der Ansprüche 1 bis 6 in einer Schleifmaschinen-Spindel.

## Revendications

1. Dispositif de broche (10) ayant un moteur intégré (30) comprenant un arbre de rotation (11), un roulement avant (50) et un roulement arrière (60) supportant en rotation l'arbre de rotation (11) par rapport à un boîtier (H), respectivement, et ledit moteur (30) comprenant un rotor (31) agencé entre le roulement avant (50) et le roulement arrière (60) de manière à pouvoir tourner d'un seul tenant avec l'arbre de rotation (11), et un stator (32) agencé autour du rotor (31),
le dispositif de broche (10) ayant le moteur intégré (30) comprenant :
un déflecteur (40) fixé à un côté de partie d'extrémité avant de l'arbre de rotation (11) pour former un joint labyrinthe (44) avec le boîtier (H),
dans lequel le boîtier (H) comprend au moins un trou de dérivation (24) qui permet à une chambre de moteur (34) dans laquelle est agencé le moteur (30) et au joint labyrinthe (44) de communiquer l'un avec l'autre, dans lequel
le boîtier (H) comprend un boîtier avant (12) auquel est ajustée une bague extérieure (51) du roulement avant (50), et un élément de retenue de bague extérieure avant (16) qui est vissé et fixé au boîtier avant (12) pour positionner la bague extérieure (51) dans une direction axiale, et forme le joint labyrinthe (44) avec le déflecteur (40),
dans lequel le trou de dérivation (24) est formé dans le boîtier avant (12), et
dans lequel, lorsque l'arbre de rotation (11) est entraîné, de l'air dont la température est devenue élevée en raison de la génération de chaleur provenant du moteur (30) peut se déplacer vers l'avant du dispositif de broche (10) en raison d'une différence de pression entre la chambre de moteur (34) et le joint labyrinthe (44) et s'écoule à travers le trou de dérivation (24), formant ainsi un rideau d'air sur une partie périphérique extérieure du boîtier avant (12) par le déflecteur (40), de sorte qu'un mécanisme résistant à l'eau qui empêche le fluide de travail tombant sur le dispositif de broche (10) d'entrer dans le roulement avant (50) soit formé.

2. Dispositif de broche (10) ayant le moteur intégré (30) selon la revendication 1, dans lequel le boîtier (H) comprend un trou d'ouverture (46) qui relie un espace arrière (45) formé par le boîtier (H) sur un côté opposé à la chambre de moteur (34) par rapport au roulement arrière (60), vers l'extérieur.

3. Dispositif de broche (10) ayant le moteur intégré (30) selon la revendication 2,
dans lequel un élément filtrant (47) capable d'éliminer un corps étranger est attaché au trou d'ouverture (46).

4. Dispositif de broche (10) ayant le moteur intégré (30) selon la revendication 2 ou 3, comprenant en outre :
un manchon (18) auquel une bague extérieure (61) du roulement arrière (60) est ajustée intérieurement et qui est ajusté intérieurement au boîtier (H) de manière à pouvoir coulisser dans la direction axiale de l'arbre de rotation (11) par rapport au boîtier (H) ; et
un élément de retenue de bague extérieure arrière (19) fixé au manchon (18) et ayant un élément de sollicitation (23) disposé entre l'élément de retenue de bague extérieure arrière (19) et le boîtier (H),
dans lequel le manchon (18) et l'élément de retenue de bague extérieure arrière (19) ont au moins un autre trou de dérivation (48) qui permet à la chambre de moteur (34) et à l'espace arrière (45) de communiquer l'un avec l'autre.

5. Dispositif de broche (10) ayant le moteur intégré (30) selon l'une quelconque des revendications 1 à 4,
dans lequel, dans le dispositif de broche (10), l'arbre de rotation (11) est utilisé dans un état horizontal, et une aire de section transversale totale de tout trou de dérivation (24) agencé au-dessus de l'arbre de rotation (11) est plus grande qu'une aire de section transversale totale de tout trou de dérivation (24) agencé en dessous de l'arbre de rotation (11).

6. Dispositif de broche (10) ayant le moteur intégré (30) selon l'une quelconque des revendications 1 à 5, dans lequel une pluralité de trous de dérivation (24) sont formés dans le boîtier avant (12) et espacés de manière égale autour de l'arbre de rotation (11) dans la direction circonférentielle.

7. Utilisation du dispositif de broche (10) ayant le moteur intégré (30) selon l'une quelconque des revendications 1 à 6 dans une broche de machine-outil.

8. Utilisation du dispositif de broche (10) ayant le moteur intégré (30) selon l'une quelconque des revendications 1 à 6 dans une broche de rectifieuse.
